# EUROPÄISCHE PATENTSCHRIFT

(11) **EP 3 235 082 B1**
(45) Veröffentlichungstag und Bekanntmachung des Hinweises auf die Patenterteilung: **13.03.2019**
(21) Anmeldenummer: 16702365.4
(22) Anmeldetag: 26.01.2016
(51) Int. Cl.: H02B 13/045, H02B 13/035, H02G 5/08, H02G 5/06

(54) **KABELDURCHFÜHRUNG FÜR MESSLEITUNGEN IN EIN ELEKTRISCH ISOLIERENDE FLANSCHVERSCHLUSSDECKEL**
CABLE FEEDTHROUGH FOR TEST WIRES IN AN ELECTRICALLY INSULATING FLANGE SEAL LID
PASSAGE DE CÂBLE POUR LIGNES DE MESURE DANS UN CAPOT DE FERMETURE À BRIDE ÉLECTRIQUEMENT ISOLANT

(30) Priorität: 20.02.2015 DE 102015203055
(43) Veröffentlichungstag der Anmeldung: 25.10.2017
(73) Patentinhaber: Siemens Aktiengesellschaft, 80333 München (DE)
(72) Erfinder: DAMBIETZ, Hans-Peter, 13589 Berlin (DE); PRESSER, Nazmir, 14052 Berlin (DE); RUNOW, Andreas, 14612 Falkensee (DE); WEISSENBERG, Dirk, 13053 Berlin (DE)
(86) Internationale Anmeldenummer: PCT/EP2016/051485
(87) Internationale Veröffentlichungsnummer: WO 2016/131607

(56) Entgegenhaltungen:
- EP-A1- 0 229 220
- DE-A1-102004 053 114
- DE-A1-102013 201 155
- DE-U1- 9 401 527
- DE-U1- 29 511 828

## Beschreibung

Die Erfindung betrifft eine Vorrichtung aufweisend einen Flanschverschlussdeckel mit einem sich in einen Flanschanlagebereich des Flanschverschlussdeckels hinein erstreckenden elektrisch isolierenden Wandungsbereich, durch welchen sich zumindest eine Leitungsdurchführung erstreckt.

Eine Vorrichtung ist beispielsweise aus der Offenlegungsschrift DE 10 2004 053 114 A1 bekannt. Die dort beschriebene Vorrichtung weist einen Flanschverschlussdeckel auf, welcher zwei rechteckige Ausnehmungen aufweisen, in welche jeweils eine Durchführungsanordnung eingesetzt ist, um einen elektrisch isolierenden Wandungsbereich zu bilden. Die dortigen Ausnehmungen sind von einem kreisringförmigen Flanschanlagebereich umschlossen. Um ein Lösen der elektrisch isolierenden Wandungsbereiche aus den rechteckigen Ausnehmungen zu verhindern, werden sogenannte Anpressplatten genutzt.

Die bekannte Konstruktion ist einerseits als mechanisch robust einzuschätzen, so dass die bekannte Vorrichtung auch unter erschwerten Bedingungen verwendet werden kann. Es ist jedoch nicht für alle Einsatzzwecke die Notwendigkeit gegeben, derart massive Flanschverschlussdeckel zu verwenden. Entsprechend erweist sich die bekannte Konstruktion für viele Einsatzzwecke als zu kostspielig.

Der europäischen Patentanmeldung EP 0 229 220 A1 sowie dem deutschen Gebrauchsmuster DE 295 11 828 sind Flanschverschlussdeckel mit einem Wandungsbereich entnehmbar, die einen Flanschanlagebereich aufweisen und zum Befestigen über Schraubverbindungungen im Flanschanlagebereich verflanscht sind.

Der Offenlegungsschrift DE 10 2013 201 155 A1 ist eine Anordnung mit einer Zugentlastungsvorrichtung entnehmbar, die einen elektrisch isolierenden Wandungsbereich aufweist, wobei der elektrisch isolierende Wandungsbereich schwimmend in einen Flanschverbund eingeklemmt ist.

Es ergibt sich somit als Aufgabe der Erfindung, eine Vorrichtung aufweisend einen Flanschverschlussdeckel zu schaffen, welche bei Sicherstellung der nötigen technischen Parameter in ausreichender Qualität kostengünstiger zu fertigen ist.

Erfindungsgemäß wird diese Aufgabe bei einer Vorrichtung der eingangs genannten Art dadurch gelöst, dass der elektrisch isolierende Wandungsbereich sich über den Flanschanlagebereich hinaus, dabei einen Abschnitt eines Anschlusskastens bildend, erstreckt.

Ein Flanschverschlussdeckel dient dazu, einen Flansch abzuschließen. Der Flanschverschlussdeckel kann dazu formkomplementär zu einem Flansch ausgeformt sein. Der Flanschverschlussdeckel sollte dabei einen elektrisch isolierenden Wandungsbereich aufweisen. Der elektrisch isolierende Wandungsbereich bildet dabei einen Teil des Flanschverschlussdeckels, so dass im elektrisch isolierenden Wandungsbereich sich zumindest eine Leitungsdurchführung durch den elektrisch isolierenden Wandungsbereich hindurch erstrecken kann. Bevorzugt sollte die Leitungsdurchführung dazu den elektrisch isolierenden Wandungsbereich queren, so dass beiderseits des Flanschverschlussdeckels also auf einer, dem zu verschließenden Flansch zugewandten Innenseite des Flanschverschlussdeckels sowie einer vom Flansch abgewandten Außenseite des Flanschverschlussdeckels ein Zugang zu der Leitungsdurchführung gewährleistet ist. Die Leitungsdurchführung kann dazu dienen, verschiedenste Leitungen, z. B. Messleitungen, durch den elektrisch isolierenden Wandungsbereich des Flanschverschlussdeckels sicher hindurchzuführen, so dass eine zulässige Verwendung der hindurchgeführten Leitungen möglich ist. Dabei können die hindurchzuführenden Leitungen verschiedenster Bauart sein. So kann beispielsweise eine elektrisch leitende Bahn Teil der hindurchzuführenden Leitung sein. Es können jedoch auch optisch leitende Bahnen sowie Bahnen, welche eine Übertragungsfunktion für elektromagnetische Wellen weiterer Wellenbereiche wahrnehmen, vorgesehen sein. Dabei kann der elektrisch isolierende Wandungsbereich einem elektrischen Isolieren der Leitungsdurchführungen im Bereich des Flanschverschlussdeckels dienen. Eine Leitungsdurchführung sollte fluiddicht in die elektrisch isolierende Wandung eingesetzt sein. Eine Durchführungsanordnung kann als diskretes Bauteil ausgebildet sein, welches auf entgegengesetzten Seiten des Flanschdeckels jeweils eine Schnittstelle zum Anschluss von Leitungen aufweist. Eine Durchführungsanordnung kann jedoch auch durch in den elektrisch isolierenden Wandungsbereich eingebettete Leitungen gebildet sein. Unabhängig von einer Ausführung einer Leitungsdurchführung sollte diese fluiddicht in die elektrisch isolierende Wandung eingesetzt sein sowie selbst fluiddicht ausgebildet sein. Unter Fluiden werden Flüssigkeiten und Gase verstanden. Beispielsweise können als Leitungsdurchführungen Kontaktstifte genutzt werden, welche beiderseits des Flanschverschlussdeckels enden und in den elektrisch isolierenden Wandungsbereich eingesetzt sind. Beispielsweise können bei einem Gussverfahren zur Ausbildung des elektrisch isolierenden Wandungsbereiches die Leitungsdurchführungen, insbesondere Kontaktstifte, in das zu diesem Zeitpunkt noch flüssige elektrisch isolierende Material eingelegt werden.

Weiterhin ist von Vorteil, wenn der Flanschverschlussdeckel mit einem Flanschanlagebereich versehen ist, welcher formkomplementär zu einem zu verschließenden Flansch ausgebildet ist. So kann beispielsweise der Flanschanlagebereich die zumindest eine Leitungsdurchführung umgeben, so dass ein mechanischer Schutz der Leitungsdurchführung auch durch den Flanschanlagebereich gegeben ist. Der Flanschanlagebereich kann beispielsweise in Form eines Schraubflansches, eines Schweißflansches, eines Klebeflansches, eines nach innen gekröpften Flansches, eines nach außen gekröpften Flansches usw. ausgebildet sein. Als besonders bevorzugt haben sich kreisringförmige Flanschanlagebereiche erwiesen, welche eine möglichst symmetrische Krafteinleitung ermöglichen. Der Flanschanlagebereich ermöglicht vorteilhaft einen fluiddichten Verschluss des Flansches. So kann ein fluiddichter Übergang zwischen Flansch und Flanschverschlussdeckel geschaffen werden. Dazu sollte der elektrisch isolierende Wandungsbereich nebst vorhandener Leitungsdurchführungen fluiddicht ausgeführt sein. Der Flanschanlagebereich bildet eine Schnittstelle zwischen einem zu verschließenden Flansch sowie dem Flanschveschlussdeckel. Flanschverschlussdeckel können beispielsweise an Elektroenergieübertragungseinrichtungen genutzt werden, um Aufnahmeräume, innerhalb welcher einer Elektroenergieübertragung dienende Phasenleiter angeordnet sind, zu verschließen. Der Verschluss kann dabei verschiedenartig ausgeführt sein. Bevorzugt sollte ein Verschluss über den Flanschanlagebereich erfolgen, wobei ein Verflanschen derart vorgesehen sein sollte, dass ein wiederholtes Öffnen und Schließen des Flanschverschlussdeckels an dem zu verschließenden Flansch ermöglicht ist. Dazu haben sich insbesondere Schraubflansche bewährt, welche z. B. mittels die Flanschflächen durchsetzenden Verspannelementen verspannt werden können.

Erstreckt sich der elektrisch isolierende Wandungsbereich in den Flanschanlagebereich des Flanschverschlussdeckels hinein, so besteht die Möglichkeit, Kräfte, welche im Flanschanlagebereich wirken bzw. in den Flanschverschlussdeckel ein- bzw. ausgeleitet werden, direkt auf den elektrisch isolierenden Wandungsbereich übergehen zu lassen. Fugen, welche einen Kraftübergang nachteilig beeinflussen könnten, sind vermieden. Als geeignete Materialien zur Ausbildung eines elektrisch isolierenden Wandungsbereiches haben sich beispielsweise polymere Kunststoffe bzw. Kompositkunststoffe erwiesen, welche einerseits eine ausreichende Elastizität sowie andererseits eine ausreichende Zähigkeit aufweisen, um beispielsweise eine Leitungsdurchführung anzunehmen und eine ausreichende Dichtigkeit des Flanschverschlussdeckels zu gewährleisten. Als elektrisch isolierendes Material zur Ausformung des elektrisch isolierenden Wandungsbereiches eignen sich auch organische Kunststoffe.

Gegebenenfalls kann der elektrisch isolierende Wandungsbereich (zumindest abschnittsweise) mechanisch verstärkt sein. So ist es beispielsweise möglich, den elektrisch isolierenden Wandungsabschnitt insbesondere im Flanschanlagebereich mit einer Bewehrung auszustatten, um mechanische Kräfte besser aufnehmen zu können. Beispielsweise können zur Bewehrung Fasern in einen Isolierstoff eingebettet sein. Eine mechanische Verstärkung kann auch durch variable Wandstärken erfolgen. Ein erfindungsgemäßer Flanschverschlussdeckel eignet sich insbesondere, um Flansche von Strom- und/oder Spannungswandlerkapselungsgehäusen zu verschließen. Strom- bzw. Spannungswandler sind Vorrichtungen, um Messwerte von elektrischen Strömen bzw. elektrischen Spannungen zu erfassen bzw. umzuwandeln. Die erfassten Messwerte können zu einer Verarbeitungseinrichtung weitergeleitet werden. Eine Leitungsdurchführung kann genutzt werden, um einen erfassten Messwert durch eine den Strom- bzw. Spannungswandler umgebende Barriere (z. B. Kapselungsgehäuse, Flanschverschlussdeckel) hindurch in die Umgebung zu übertragen.

Der Flanschverschlussdeckel kann dabei einen Flansch eines Kapselungsgehäuses eines Strom- bzw. Spannungswandlers verschließen. Das Kapselungsgehäuse des Strom- bzw. Spannungswandlers kann mit einem Fluid befüllt sein. Dieses Fluid kann unter Überdruck stehen, so dass es sich bei dem Kapselungsgehäuse des Strom- bzw. Spannungswandlers um einen Druckbehälter handeln kann. Entsprechend kann der Flanschverschlussdeckel einen Teil der fluiddichten Barriere eines Druckbehälters/eines Kapselungsgehäuses darstellen.

Der elektrisch isolierende Wandungsbereich kann somit Teil einer Barriere eines Druckbehälters/eines Kapselungsgehäuses sein. Die Ausgestaltung des elektrisch isolierenden Wandungsbereiches kann variieren. Insbesondere kann vorgesehen sein, dass der Flanschanlagebereich lediglich teilweise durch den elektrisch isolierenden Wandungsbereich gebildet ist, so dass der Flanschanlagebereich beispielsweise aus mehreren Teilabschnitten zusammengesetzt sein kann, von denen zumindest ein Teilabschnitt durch den elektrisch isolierenden Wandungsbereich bereitgestellt wird. Es kann jedoch auch vorgesehen sein, dass der Flanschanlagebereich vollständig durch den elektrisch isolierenden Wandungsbereich zur Verfügung gestellt wird. Vorteilhaft kann es sein, dass die zumindest eine Leitungsdurchführung von dem Flanschanlagebereich umgriffen ist, so dass der Flanschanlagebereich vor mechanischen Beschädigungen der Leitungsdurchführung schützen kann. Vorteilhafterweise kann der Flanschanlagebereich vollständig aus dem elektrisch isolierenden Wandungsbereich gebildet sein. Der Flanschanlagebereich kann beispielsweise an den elektrisch isolierenden Wandungsbereich angeformt sein. Eine Ausformung des Flanschanlagebereiches kann beispielsweise nach Art eines Kreisringes erfolgen.

Weiterhin ist vorgesehen, dass der elektrisch isolierende Wandungsbereich sich über den Flanschanlagebereich hinaus erstreckt.

Neben einem Erstrecken des elektrisch isolierenden Wandungsbereiches in einen Flanschanlagebereich hinein, kann vorgesehen sein, dass der elektrisch isolierende Wandungsbereich sich auch über den Flanschanlagebereich hinaus erstreckt. Das heißt, unabhängig von der Art der Ausgestaltung des Flanschanlagebereiches kann der elektrisch isolierende Wandungsbereich den Flanschanlagebereich passieren und sich über den Flanschanlagebereich hinaus weiter erstrecken. Es besteht die Möglichkeit, den elektrisch isolierenden Wandungsbereich in eine mechanische Verspannung des Flanschverschlussdeckels einzubeziehen und Verspannkräfte über den Flanschanlagebereich unmittelbar in den elektrisch isolierenden Wandungsbereich übertreten zu lassen. Der Flanschanlagebereich kann den elektrisch isolierenden Bereich in mehrere Zonen unterteilen. Eine erste Zone kann der Aufnahme einer Leitungsdurchführung dienen. Die erste Zone kann weiter eine fluiddichte Wandung zum Verschluss eines Flansches bilden. Die erste Zone kann Teil einer fluiddichten Barriere eines Druckbehälters sein. Der Flanschanlagebereich kann eine Begrenzung der ersten Zone darstellen. Nach einer Passage des Flanschanlagebereiches durch den elektrisch isolierenden Wandungsbereich ist eine zweite Zone erreicht, welche nicht mehr einem Verschluss eines Flansches dient. Die zweite Zone kann so der Aufnahme von weiteren Bauteilen dienen. Der Flanschverschlussdeckel kann als Traggestell für weitere Bauteile dienen. Darüber hinaus können sich ausgehend von dem Flanschanlagebereich (in der zweiten Zone) weitere Teile des elektrisch isolierenden Wandungsabschnittes erstrecken. Damit befinden sich diese Teile außerhalb der ersten Zone, welche einem Abschließen bzw. Verschließen eines Flansches mittels des Flanschverschlussdeckels dient. Ausgehend von dem Flanschanlagebereich können sich Wandungen an den Flanschverschlussdeckel anschließen, welche unabhängig von einer Verschlussfunktion des Flanschverschlussdeckels positioniert sind. Somit kann beispielsweise die Anordnung weiterer Teile des elektrisch isolierenden Wandungsabschnittes vorgesehen sein, welche beispielsweise einen zusätzlichen mechanischen Schutz an der Vorrichtung (z.B. für den Flanschanlagebereich) bieten können.

Weiterhin kann vorteilhaft vorgesehen sein, dass der elektrisch isolierende Wandungsbereich eine Dichtfläche aufweist.

Eine Nutzung einer Dichtfläche an dem elektrisch isolierenden Wandungsbereich gestattet es, einen insbesondere fluiddichten Verbund zwischen Flanschverschlussdeckel und zu verschließendem Flansch zu schaffen. Die Dichtfläche sollte dabei eine Zone (insbesondere die erste Zone) des elektrisch isolierenden Wandungsbereiches umgeben, innerhalb welcher eine Leitungsdurchführung angeordnet ist. Somit kann neben einer mechanischen Schutzfunktion des Flanschanlagebereiches zusätzlich eine chemische Schutzfunktion für die Leitungsdurchführung gegeben sein.

Eine weitere vorteilhafte Ausgestaltung kann vorsehen, dass die Dichtfläche im Flanschanlagebereich angeordnet ist.

Die Dichtfläche kann sich zumindest teilweise innerhalb des Flanschanlagebereiches erstrecken. Der Flanschanlagebereich ist somit durch die dichtende Funktion in der Lage, die zentrale erste Zone, welche von dem Flanschanlagebereich umschlossen sein kann und in welcher bevorzugt die Leitungsdurchführung positioniert ist, vor chemischen Beeinflussungen zu schützen. Beispielsweise kann der Flanschanlagebereich eine Ringform aufweisen, in welche gegebenenfalls eine Nut oder eine Profilierung angeordnet ist, um eine Dichtfläche auszuformen. Zusätzlich können Dichtelemente an der Dichtfläche anliegen, welche eine Dichtwirkung zusätzlich erhöhen. Beispielsweise können elastomere Dichtelemente wie O-Ringe oder ähnliches an der Dichtfläche zur Anlage gebracht werden, welche unter elastischer Verformung eine Dichtwirkung entfalten.

Vorteilhafterweise kann weiter vorgesehen sein, dass im Flanschanlagebereich zumindest ein Verspannelement angeordnet ist.

Eine Positionierung eines Verspannelementes im Flanschanlagebereich ermöglicht es, unmittelbar im Flanschanlagebereich Kräfte in den elektrisch isolierenden Wandungsbereich einzuleiten bzw. von diesem auszuleiten. Verspannelemente können beispielsweise Bolzen sein, welche den Flanschanlagebereich durchsetzen. Dazu kann vorgesehen sein, dass die Bolzen beispielsweise durch Ausnehmungen, welche im Flanschanlagebereich positioniert sind, hindurch ragen. Es kann jedoch auch vorgesehen sein, dass die Bolzen als integraler Bestandteil des Flanschanlagebereiches ausgebildet sind. Beispielsweise kann ein winkelstarrer Verbund zwischen Bolzen und dem Flanschanlagebereich vorgesehen sein. Zum Beispiel kann ein Bolzen in den Flanschanlagebereich stoffflüssig eingesetzt sein.

Weiterhin ist vorteilhaft vorgesehen, dass der elektrisch isolierende Wandungsbereich einen Abschnitt eines Anschlusskastens bildet.

Durch eine Integration des elektrisch isolierenden Wandungsbereiches in einen Anschlusskasten ist die Möglichkeit gegeben, den Anschlusskasten gemeinsam mit dem elektrisch isolierenden Wandungsbereich sowie der Leitungsdurchführung zu bewegen. Dies eröffnet die Möglichkeit, eine Montage des Anschlusskastens zeitgleich mit einem Verschließen eines Flansches vorzunehmen. Darüber hinaus besteht die Möglichkeit, den Anschlusskasten fügespaltfrei mit dem elektrisch isolierenden Wandungsbereich zu verbinden. Es besteht weiterhin die Möglichkeit, einen winkelstarren Verbund zwischen elektrisch isolierendem Wandungsbereich und dem Anschlusskasten hervorzurufen, welcher bei einer hinreichenden Elastizität eine dauerhafte Stabilität bzw. Dichtigkeit gewährleistet. Ein Anschlusskasten ist dabei ein Hohlkörper, welcher einem Einhausen bzw. einem Umschluss eines Volumens dient. Dabei wird das Volumen durch Wandungen des Anschlusskastens begrenzt, wobei zumindest ein Teil der das Volumen begrenzenden Wandungen des Anschlusskastens durch den elektrisch isolierenden Wandungsbereich gebildet ist. Bevorzugt kann der Anschlusskasten zumindest abschnittsweise eine konkav gekrümmte Struktur aufweisen, wobei in der konkav gekrümmten Struktur des Volumens des Anschlusskastens begrenzt ist. Der Flanschanlagebereich kann als Basis dienen, um den Anschlusskasten zu positionieren und diesen gemeinsam mit dem Flanschverschlussdeckel zu montieren.

Eine weitere vorteilhafte Ausgestaltung kann vorsehen, dass der elektrisch isolierende Wandungsbereich Teil einer Wandung des Anschlusskastens ist.

Integriert man den elektrisch isolierenden Wandungsbereich in eine Wandung des Anschlusskastens, so kann die Wandung des Anschlusskastens einer Hindurchführung von Anschlussleitungen dienen. Damit können Messleitungen von der einen Seite des Flanschverschlussdeckels auf eine andere Seite des Flanschverschlussdeckels geführt werden. Weiterhin sind die Leitungsdurchführungen innerhalb des Anschlusskastens vor weiterer Beeinflussung geschützt angeordnet. Beispielsweise kann eine Bodenplatte nach Art einer nahezu ebenen Fläche ausgebildet werden. Es kann jedoch auch vorgesehen sein, dass die Wandung, in welcher der elektrisch isolierende Wandungsbereich liegt, selbst Teil einer konkav gekrümmten Wandung des Anschlusskastens ist.

Eine weiter vorteilhafte Ausgestaltung kann vorsehen, dass der Anschlusskasten mit einem Abdeckelement verschließbar ist.

Die Nutzung eines Abdeckelementes gestattet es, den Anschlusskasten einerseits in den elektrisch isolierenden Wandungsbereich übertreten zu lassen, andererseits wird durch die Verwendung eines diskreten Abdeckelementes die Möglichkeit geschaffen, einen Zugang zum Inneren des Anschlusskastens herzustellen. So ist die Montage des Anschlusskastens erleichtert. Insbesondere können in dem Anschlusskasten weitere Baugruppen wie beispielsweise Rangierverteiler, Kontaktelemente, Sensoren, Teile einer Leistungsdurchführung usw. angeordnet sein, welche durch den Anschlusskasten einen mechanischen Schutz erfahren. Weiterhin kann der Anschlusskasten dazu dienen, die über die Leitungsdurchführungen hindurchgeführten Leitungen mit einer Schnittstelle zu verbinden, über welche dann eine weitere Übertragung von Informationen usw. vorgenommen werden kann. So ist es beispielsweise möglich, innerhalb des Anschlusskastens einen Übergang von den Leitungsdurchführungen auf ein Meldekabel oder ähnliches vorzunehmen, so dass außerhalb des Anschlusskastens eine mechanische widerstandsfähige Übertragungsstrecke von Informationen, welche über die Leitungsdurchführungen transferiert werden, gegeben ist.

Eine weitere vorteilhafte Ausgestaltung kann vorsehen, dass das Abdeckelement im geschlossenen Zustand des Anschlusskatsens den Flanschanlagebereich überspannt.

Wird das Abdeckelemente derart ausgestaltet, dass es den Flanschanlagebereich überspannt, so ist in einfacher Weise die Möglichkeit gegeben, nach einem Entfernen des Abdeckelementes einen Zugang zum Inneren des Anschlusskastens auszubilden. Aufgrund der Überspannung des Abdeckelementes kann ein direkter Zugriff auf den Flanschanlagebereich bzw. die von dem Flanschanlagebereich umgriffene erste Zone des elektrisch isolierenden Wandungsbereiches, in welchem sich die zumindest eine Leitungsdurchführung befindet, ermöglicht sein. Damit ist es beispielsweise möglich, die Leitungsdurchführung zu kontaktieren bzw. zu dekontaktieren und vereinfachte Montageverhältnisse zu schaffen. Desweiteren kann beispielsweise ein Anschlusskasten ausgeformt werden, welcher orthogonale Hauptachsen aufweist.

Eine weitere vorteilhafte Ausgestaltung kann vorsehen, dass der Flanschverschlussdeckel einem fluiddichten Verschluss eines Flansches dient.

Ein fluiddichter Verschluss eines Flansches mittels des Flanschdeckels weist den Vorteil auf, dass der Flanschverschlussdeckel eine Barriere darstellen kann, durch welche ein Fluid nicht hindurchzudringen vermag. Unter Fluiden werden im Sinne dieses Dokumentes Gase und Flüssigkeiten verstanden. Somit ist es möglich, den Flanschdeckel als Teil einer fluiddichten Barriere auszubilden. Dies eröffnet die Möglichkeit, beiderseits des Flanschdeckels bzw. beiderseits des elektrisch isolierenden Wandungsbereiches unterschiedliche Medien anzuordnen, welche über den Flanschverschlussdeckel voneinander separiert sind. So kann beispielsweise vorgesehen sein, dass auf einer Seite des Flanschverschlussdeckels, beispielsweise innerhalb des von dem Flanschverschlussdeckel verschlossenen Flansches ein Fluid unter Überdruck angeordnet ist, wohingegen auf der abgewandten Seite des Flanschverschlussdeckels ein Fluid beispielsweise innerhalb eines Anschlusskastens angeordnet ist, welches unter atmosphärischem Druck steht. Entsprechend ist der Flanschverschlussdeckel bzw. der elektrisch isolierende Wandungsbereich Teil einer druckfesten Barriere eines Druckbehälters, welche Differenzdrücken zu widerstehen hat.

Derartige fluiddichte Verschlüsse sind beispielsweise an Kapselungsgehäusen von Messwandlern, die zur Messung von elektrischen Strömen und/oder elektrischen Spannungen eingesetzt werden, vorteilhaft einsetzbar. Somit besteht die Möglichkeit, diese Messwandler bzw. die Kapselungsgehäuse dieser Messwandler an druckfluidisolierten Elektroenergieübertragungseinrichtungen einzusetzen bzw. anzuflanschen und eine kompakte Ausgestaltung der Messwandler zu erzielen. Dazu kann ein elektrisch isolierendes Fluid in dem Kapselungsgehäuse des Messwandlers eingehaust und dort bevorzugt unter Überdruck gesetzt sein, um dessen elektrische Isolationsfestigkeit zusätzlich zu erhöhen. Als elektrisch isolierende Fluide sind beispielsweise Stickstoff, Kohlendioxid, Schwefelhexafluorid, andere geeignete elektronegative Fluide sowie Gemische mit diesen Fluiden verwendbar. Fluide können dabei bevorzugt gasförmig vorliegen. Es kann jedoch auch vorgesehen sein, dass Fluide in flüssigem oder teilweise flüssigem und teilweise gasförmigem Zustand vorliegen. Darüber hinaus können auch weitere flüssige Fluide wie Isolieröle, Isolierester, usw. Verwendung finden.

Eine weitere vorteilhafte Ausgestaltung kann vorsehen, dass der Flanschverschlussdeckel Teil eines insbesondere fluiddichten Kapselungsgehäuses einer Elektroenergieübertragungseinrichtung ist.

Ein fluiddichtes Kapselungsgehäuse einer Elektroenergieübertragungseinrichtung dient der Ausbildung zumindest eines Aufnahmeraumes, innerhalb welchem Phasenleiter, welche der Übertragung von elektrischer Energie dienen, angeordnet sind. Eine elektrische Isolation innerhalb des zumindest einen Aufnahmeraumes ist bevorzugt durch ein innerhalb des Aufnahmeraumes eingeschlossenes elektrisch isolierendes Fluid gewährleistet. Damit ist innerhalb des Aufnahmeraumes eine elektrische Isolation gebildet, welche als selbstregenerierend bezeichnet wird, da nach einem Auftreten von elektrischen Durchschlägen Durchschlagskanäle selbstständig verschlossen werden können. Als Elektroenergieübertragungseinrichtungen sind beispielsweise gasisolierte Rohrleitungen bzw. gasisolierte Schaltanlagen bekannt, welche Kapselungsgehäuse aufweisen, die als Druckbehälter ausgeführt sind, um im Innern der Kapselungsgehäuse befindliche elektrisch isolierende Fluide unter Überdruck setzen zu können. Dadurch wird die Isolationsfestigkeit dieser elektrisch isolierenden Fluide verbessert. Da derartige fluiddichte Kapselungsgehäuse an Elektroenergieübertragungseinrichtungen insbesondere bei hohen Spannungen bzw. hohen Strömen Einsatz finden, ist ein Erfassen der selbigen vorteilhaft unter Nutzung von sogenannten Messwandlern möglich. Messwandler ermöglichen ein Wandeln der hohen Spannungen bzw. Strömen auf normierte Größe, um diese wiederum in weiteren Vorrichtungen verarbeiten zu können und so z. B. Schutz- oder Verrechnungszwecken dienen. Messwandler sind dabei innerhalb von Kapselungsgehäusen angeordnet, die auch mit einem entsprechenden elektrisch isolierenden Fluid befüllt sein können. Die innerhalb der Kapselungsgehäuse befindlichen sogenannten Aktivteile der Messwandler liefern normierte Größen, welche mittels Leitungen durch das Kapselungsgehäuse hindurch übertragen werden können. Dabei kann vorteilhafterweise die Verwendung eines Flanschverschlussdeckels vorgesehen sein, um Leitungsdurchführungen zu positionieren, die einer Hindurchführung von Leitungen durch die Barriere des Kapselungsgehäuses eines Messwandlers (Stromwandler und/oder Spannungswandler) dienen. Unter Nutzung eines entsprechenden Anschlusskastens, welcher als integraler Bestandteil des Flanschverschlussdeckels ausgebildet sein kann, kann außerhalb eines Kapselungsgehäuses der Elektroenergieübertragungseinrichtung eine weitere Verarbeitung, Umsetzung, Fortleitung von über Leitungen übertragener Informationen vorgenommen werden. Beispielsweise können innerhalb des Anschlusskastens auch weitere Umsetzungen, Transformationen usw. von Messdaten vorgenommen werden.

Ein Ausführungsbeispiel der Erfindung ist schematisch in einer Zeichnung gezeigt und wird nachfolgend näher beschrieben.
Dabei zeigt die
- Fig. 1: einen Schnitt durch eine Vorrichtung aufweisend einen Flanschverschlussdeckel sowie die
- Fig. 2: den aus der Fig. 1 bekannten Schnitt in einer perspektivischen Ansicht.

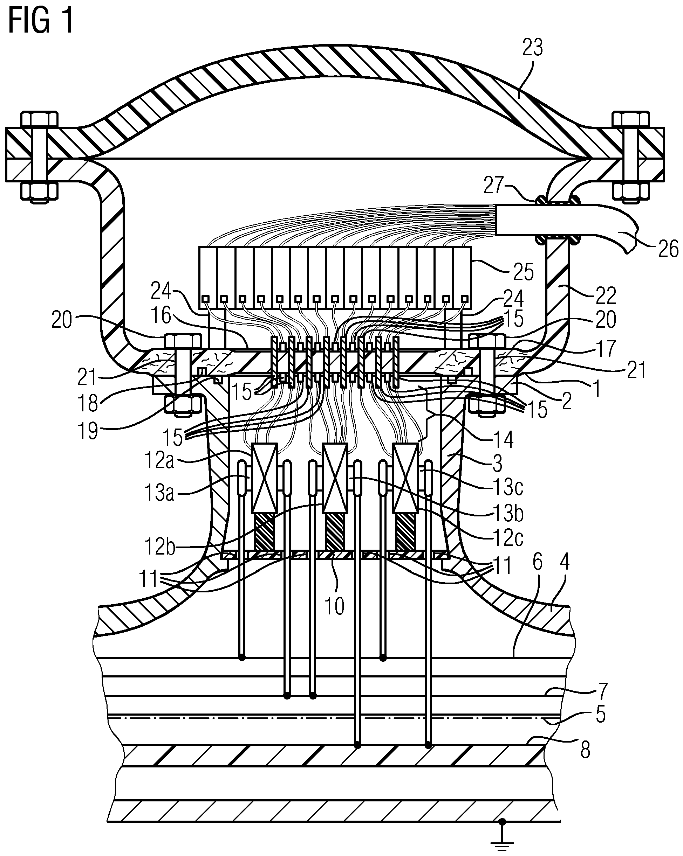

Die Fig. 1 zeigt einen Querschnitt durch eine Vorrichtung aufweisend einen Flanschverschlussdeckel 1. Der Flanschverschlussdeckel 1 ist winkelstarr mit einem Flansch 2 verbunden. Der Flansch 2 begrenzt einen Flanschstutzen 3. Der Flanschstutzen 3 ist Teil eines Kapselungsgehäuses eines Messwandlers. Der Flanschstutzen 3, welcher sich an einem Kapselungsgehäusegrundkörper 4 mantelseitig anschließt, ist elektrisch leitend ausgeführt. Bevorzugt ist der Flanschstutzen 3 nebst Flansch 2 sowie Kapselungsgehäusegrundkörper 4 metallisch ausgeführt, wobei der Flansch 2, der Flanschstutzen 3 sowie der Kapselungsgehäusegrundkörper 4 mit Erdpotential beaufschlagt sind. Die Wandungen des Kapselungsgehäusegrundkörpers 4, des Flanschstutzens 3 sowie des Flansches 2 sind dabei fluiddicht ausgeführt. Der Kapselungsgehäusegrundkörper 4 ist im Wesentlichen rohrförmig ausgebildet, wobei der Kapselungsgehäusegrundkörper 4 sich koaxial zu einer Längsachse 5 erstreckt. Im Innern des Kapselungsgehäusegrundkörpers 4 sind ein erster Phasenleiter 6, ein zweiter Phasenleiter 7 sowie ein dritter Phasenleiter 8 angeordnet. Die drei Phasenleiter 6, 7, 8 dienen einer Führung eines elektrischen Stromes und sind entsprechend aus einem elektrisch leitenden Material gebildet. Bevorzugt können zur Ausbildung der Phasenleiter 6, 7, 8 Aluminium, Kupfer oder Legierungen mit diesen Metallen eingesetzt werden. Die drei Phasenleiter 6, 7, 8 weisen im Wesentlichen eine zylindrische Form auf, wobei Zylinderachsen der Phasenleiter 6, 7, 8 zueinander parallel und weiterhin parallel zur Längsachse 5 angeordnet sind. Die Zylinderachsen der Phasenleiter 6, 7, 8 sind in einer stirnseitigen Ansicht bevorzugt in einer gleichseitigen Dreiecksanordnung positioniert, wobei mittig die Längsachse 5 verlaufend angeordnet ist. Entsprechend ergibt sich die Darstellung nach Fig. 1, in welcher der dritte Phasenleiter 8 in der Schnittebene der Zeichnung geschnitten dargestellt ist, wohingegen der erste Phasenleiter 6 sowie der zweite Phasenleiter 7 außerhalb der Schnittebene liegen. Die Phasenleiter 6, 7, 8 sind zu Isolationszwecken von einem elektrisch isolierenden Fluid umspült, welches innerhalb des Kapselungsgrundkörpers 4 eingeschlossen ist. Als Fluide eignen sich beispielsweise Schwefelhexafluorid, Stickstoff, Kohlendioxid oder Gemische mit diesen Stoffen. Bevorzugt sollte das Fluid gasförmig vorliegen. Dabei sollte zur Erhöhung der elektrischen Isolationsfestigkeit das Fluid unter Überdruck gesetzt sein, wodurch der Kapselungsgehäusegrundkörper 4, der Flanschstutzen 3 und der Flansch 2 als Teile eines Druckbehälters wirken. Zur Abstützung der Phasenleiter 6, 7, 8 gegenüber dem Kapselungsgehäusegrundkörper 4 sind in der Figur nicht abgebildete elektrisch isolierende Stützelemente eingesetzt, welche die Phasenleiter 6, 7, 8 relativ zur Wandung des Kapselungsgrundkörpers 4 positionieren. Dies können beispielsweise Scheibenisolatoren oder säulenförmige Isolatoren sein.

Mantelseitig am Kapselungsgehäusegrundkörper 4 schließt sich der Flanschstutzen 3 an. Der Flanschstutzen 3 weist dabei einen im Wesentlichen hohlzylindrischen Querschnitt auf, wobei die Hohlzylinderachse des Flanschstutzens 3 im Wesentlichen lotrecht zur Längsachse 5 des Kapselungsgehäusegrundkörpers 4 ausgerichtet ist. Beispielsweise kann es sich bei dem Kapselungsgehäusegrundkörper 4 um einen Gusskörper handeln, welcher durch ein Gussverfahren geformt wurde, wobei während des Gießens auch ein Ausformen des Flanschstutzens 3 bzw. des Flansches 2 möglich ist. Entsprechend können der Flansch 2, der Flanschstutzen 3 sowie der Kapselungsgehäusegrundkörper 4 als einstückiger Körper ausgeführt sein. Darüber hinaus besteht auch die Möglichkeit, unter Verwendung weiterer Verbindungsmittel, beispielsweise weiterer Flansche oder mittels stoffflüssigen Verbindungsverfahren den Flansch 2, den Flanschstutzen 3 sowie den Kapselungsgehäusegrundkörper 4 in Einzelteilen zu fertigen und diese anschließend zusammenzufügen.

Innenmantelseitig am Flanschstutzen 3 sind vorspringende Lagerpunkte 9a, 9b angeordnet. An den Lagerpunkten 9a, 9b ist eine elektrisch isolierende Platte 10 abgestützt. Die elektrisch isolierende Platte 10 kann eine fluiddichte Barriere zwischen den Aufnahmeräumen des Kapselungsgehäusegrundkörpers 4 sowie dem Flanschstutzen 3 ausbilden. Dies ist insbesondere bei einem Verflanschen von Flanschstutzen 3 und Kapselungsgehäusegrundkörper 4 vorteilhaft. Die isolierende Platte 10 kann auch in einer Flanschverbindung eingelegt werden. Vorliegend ist jedoch eine Anordnung von Überstromkanälen 11 vorgesehen, so dass ein Fluid zwischen dem Inneren des Kapselungsgehäusegrundkörpers 4 sowie dem Inneren des Flanschstutzens 3 zirkulieren kann.

Die elektrisch isolierende Platte 10 grenzt das Kapselungsgehäuse eines Messwandlers gegenüber dem Kapselungsgehäusegrundkörper 4 ab. Vorliegend ist der Flanschstutzen 3 Teil des Kapselungsgehäuses des Messwandlers. Der Messwandler weist vorliegend Messwicklungen 12a, 12b, 12c (Aktivteile) auf. Die Messwicklungen 12a, 12b, 12c können jeweils redundant ausgeführt sein. Die Messwicklungen 12a, 12b, 12c dienen einer Erfassung von Spannungen, welche zwischen dem ersten und dem zweiten Phasenleiter 6, 7 zwischen dem zweiten und dem dritten Phasenleiter 7, 8 sowie zwischen dem ersten und dem dritten Phasenleiter 6, 8 anliegen. Darüber hinaus können über die Messwicklungen auch weitere Spannungen, beispielsweise die Spannungen der Phasenleiter 6, 7, 8 gegenüber einem definierten Potential, beispielsweise Erdpotential, gemessen werden. Weiterhin besteht die Möglichkeit, neben einer Spannungsmessung zusätzlich oder alternativ eine Strommessung über weitere Aktivteile vorzunehmen, welche einen Stromfluss durch den ersten, den zweiten bzw. den dritten Phasenleiter 6, 7, 8 detektieren. Vorliegend sind zum Abgriff der elektrischen Potentiale der Phasenleiter 6, 7, 8 jeweils Messbrücken 13a, 13b, 13c vorgesehen, welche mit dem jeweiligen Phasenleiter 6, 7, 8 kontaktiert sind, die elektrisch isolierende Platte 10 passieren und ihrerseits von den jeweiligen Messwicklungen 12a, 12b, 12c umgriffen sind. Die Messwicklungen 12a, 12b, 12c sowie die jeweils von ihnen umgriffenen Messbrücken 13a, 13b, 13c sind mechanisch an der elektrisch isolierenden Platte 10 abgestützt.

Um die von den Messwicklungen 12a, 12b, 12c gewandelten Daten weiterverarbeiten zu können, sind (Mess-)Leitungen 14 an den Messwicklungen 12a, 12b, 12c angeordnet. Die Leitungen 14 sind nunmehr aus dem Inneren des Flanschstutzens 3/des Kapselungsgehäuses des Messwandlers heraus zu leiten, um außerhalb des Flanschstutzens 3/des Kapselungsgehäuses des Messwandlers Messdaten übergeben zu können. Dazu weist der Flanschverschlussdeckel 1 Leitungsdurchführungen 15 auf. Die Leitungsdurchführungen 15 sind in einen elektrisch isolierenden Wandungsbereich 16 des Flanschverschlussdeckels 1 eingebettet. Je nach verwendeten Leitungen 14 können die Leitungsdurchführungen 15 verschiedenartig aufgebaut sein. So ist es beispielsweise möglich, Leitungsdurchführungen 15 vorzusehen, welcher einer Übertragung eines elektrischen Impulses durch den Flanschverschlussdeckel 1 hindurch dienen. In diesem Falle weist eine Leitungsdurchführung 15 zumindest eine elektrisch leitfähige Strombahn auf, welche den Flanschverschlussdeckel 1 im Bereich (in einer ersten Zone) des elektrisch isolierenden Wandungsbereiches 16 durchsetzt. In diesem Falle kann der elektrisch isolierende Wandungsbereich 16 auch die elektrische Isolation der Leitungsdurchführung 15 übernehmen. Weiterhin besteht die Möglichkeit, beispielsweise optische Leitungen 14 zu verwenden. In diesem Falle sind entsprechende optisch leitfähige Bahnen durch eine entsprechende Leitungsdurchführung 15 durch den Flanschverschlussdeckel 1 hindurchzuführen. Darüber hinaus können auch noch weitere Leitungsdurchführungen Verwendung finden sowie weitere Leitungsvarianten Einsatz finden. Gegebenenfalls können auch verschiedene Ausführungsvarianten von Leitungsdurchführungen 15 in demselben elektrisch isolierenden Wandungsbereich 16 des Flanschverschlussdeckels 1 angeordnet sein. Der elektrisch isolierende Wandungsbereich 16 ragt vorliegend bis in einen Flanschanlagebereich 17 des Flanschverschlussdeckels 1 hinein. Vorliegend ist der Flanschanlagebereich 17 mit einer vorspringenden kreisringförmigen Struktur versehen, wobei zur Ausbildung der kreisringförmigen Struktur der Flanschanlagebereich 17 durch eine Wandungsverdickung im Flanschverschlussdeckel 1 ausgeformt ist. Der Flanschanlagebereich 17 umschließt dabei auf seiner Kreisringinnenseite eine erste Zone des elektrisch isolierenden Wandungsbereiches 16, in welcher die Leitungsdurchführungen 15 angeordnet sind. Der elektrisch isolierende Wandungsbereich 16 erstreckt sich dabei bis in den Flanschanlagebereich 17 hinein. Das heißt, auch der Flanschanlagebereich 17 ist aus elektrisch isolierendem Material gebildet. Zur Verstärkung der mechanischen Stabilität des Flanschanlagebereiches 17 ist in der Fig. 1 symbolhaft die Anordnung von Bewehrungsmitteln innerhalb des elektrisch isolierenden Materials im Flanschanlagebereich 17 dargestellt. Die Bewehrungsmittel können beispielsweise Fasern sein, welche einen Kraftverlauf innerhalb des Flanschanlagebereiches 17 positiv beeinflussen.

Der Flanschanlagebereich 17 weist eine Dichtfläche 18 auf. Vorliegend ist die Dichtfläche 18 in Form einer Ringnut ausgebildet, so dass in die Ringnut ein zusätzliches Dichtelement, beispielsweise ein elastomerer Dichtring, eingelegt werden kann. Die Dichtfläche 18 ist vorliegend durch einen Nutboden der Ringnut gebildet. Alternativ oder zusätzlich kann auch der Flansch 2 in einer Ringnut eine Dichtfläche 19 aufweisen, in welchen ebenfalls ein elastisches Dichteelement einlegbar ist. Weiterhin sind im Flanschanlagebereich 17 Verspannelemente 20 in Form von Schraubbolzen angeordnet. Die Verspannelemente 20 sitzen jeweils in Durchgangsbohrungen 21, welche den Flanschanlagebereich 17 passieren. Über die Verspannelemente 20 ist ein kraftschlüssiger Verbund zwischen dem Flansch 2 sowie dem Flanschverschlussdeckel 1 gegeben. Weiterhin kann über die Dichtflächen 18, 19 ein fluiddichter Verschluss des Flansches 2 vorgenommen werden. Damit ist der Flanschstutzen 3 sowie damit auch der Kapselungsgehäusegrundkörper 4 fluiddicht verschlossen und abgeschlossen. Die erste Zone sowie der Flanschanlagebereich 17 des elektrisch isolierenden Wandungsbereiches 16 sind Teil einer fluiddichten Barriere des Kapselungsgehäuses des Messwandlers.

Neben einer Erstreckung des elektrisch isolierenden Wandungsbereiches 16 in den Flanschanlagebereich 17 hinein erstreckt sich der elektrisch isolierende Wandungsbereich 16 auch über den Flanschanlagebereich 17 hinaus und bildet Wandungen eines Anschlusskastens 22. Über den Flanschanlagebereich 17 hinausragenden Teile des elektrisch isolierenden Wandungsbereiches 16 bilden eine zweite Zone. Die zweite Zone ist gerade keine druckfeste Barriere des Kapselungsgehäuses des Messwandlers. Der Anschlusskasten 22 weist vorliegend eine Topfform auf, so dass es einen Topfboden gibt, innerhalb welchem die Leitungsdurchführungen 15 den Flanschverschlussdeckel 1 und damit eine Wandung des Anschlusskastens 22 durchsetzen. Der Topfboden des Anschlusskastens 22 geht in eine mantelseitige hohlzylindrische Mantelwandung über, welche oberhalb des Topfbodens einen konkav gekrümmten Aufnahmeraum am Anschlusskasten 22 zur Verfügung stellt. Zum Verschluss des Anschlusskastens 22 ist ein Abdeckelement 23 auf den Anschlusskasten 22 aufgesetzt. Das Abdeckelement 23 ist mit einer ringförmigen Auskragung der mantelseitigen Wandung des Anschlusskastens 22 verbunden und dort mittels Verschraubung winkelstarr positioniert. Entsprechend überspannt das Abdeckelement 23 des Anschlusskastens 22 den Flanschanlagebereich 17 des Flanschverschlussdeckels 1.

Im Innern des Anschlusskastens 22 ist ein Rangierverteiler 25 auf Stehbolzen 24 aufgesetzt. Zusätzlich oder alternativ können neben dem Rangierverteiler 25 auch weitere Elemente im Innern des Anschlusskastens 22 positioniert sein. Über den Rangierverteiler 25 ist es möglich, die im Innern des Anschlusskastens 22 mündenden Leitungsdurchführungen 15 zu kontaktieren und eine Schnittstelle für eine Anschlussleitung 26 zur Verfügung zu stellen. Die Anschlussleitung 26 kann beispielsweise die Mantelwandung des Anschlusskastens 22 passieren. Beispielsweise kann dazu ein Dichtelement 27 genutzt werden. Im Innern des Anschlusskastens 22 ist die Anschlussleitung 26 abgesetzt, so dass die einzelnen Adern der Anschlussleitung 26 auf den Rangierverteiler 25 aufgelegt werden können und eine Einbindung der von den Messwicklungen 12a, 12b, 12c bereitgestellten Informationen und Verarbeitung der Informationen unter Zwischenschaltung der Anschlussleitung 26 möglich ist.

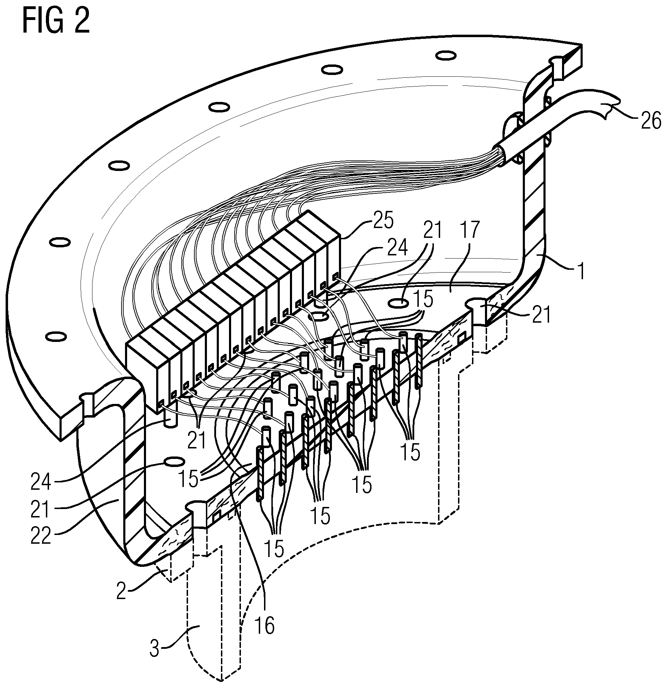

Eine perspektivische Ansicht des geschnittenen Anschlusskastens 22 ist in der Fig. 2 gezeigt. Zu erkennen ist insbesondere der kreisringförmige Flanschanlagebereich 17 mit den den Flanschanlagebereich 17 durchsetzenden Durchgangsbohrungen 21. Der Flansch 2 sowie der Flanschstutzen 3 sind durch strichpunktierte Körperkanten angedeutet. Weiterhin ist erkennbar, dass die erste Zone des elektrisch isolierenden Wandungsbereiches 16, in welcher die Leitungsdurchführungen 15 angeordnet sind, einen im Wesentlichen kreisförmigen Querschnitt aufweist, wobei die Leitungsdurchführungen 15 im Wesentlichen parallel zueinander ausgerichtet den Flanschverschlussdeckel 1 durchsetzen.

### Bezugszeichenliste

- 1: Flanschverschlussdeckel
- 2: Flansch
- 3: Flanschstutzen
- 4: Kapselungsgehäusegrundkörper
- 5: Längsachse
- 6: erster Phasenleiter
- 7: zweiter Phasenleiter
- 8: dritter Phasenleiter
- 9a,9b: Lagerungspunkte
- 10: elektrisch isolierende Platte
- 11: Überstromkanäle
- 12a,12b,12c: Messwicklungen
- 13a,13b,13c: Messbrücken
- 14: Messleitungen
- 15: Leitungsdurchführungen
- 16: elektrisch isolierender Wandungsbereich
- 17: Flanschanlagebereich
- 18: Dichtfläche
- 19: Dichtfläche
- 20: Verspannelement
- 21: Durchgangsbohrung
- 22: Anschlusskapselungsgehäuse
- 23: Abdeckelement
- 24: Stutzbolzen
- 25: Rangierverteiler
- 26: Anschlussleitungen
- 27: Dichtelement

## Patentansprüche

1. Vorrichtung aufweisend einen Flanschverschlussdeckel (1) mit einem sich in einen Flanschanlagebereich (17) des Flanschverschlussdeckels (1) hinein erstreckenden elektrisch isolierenden Wandungsbereich (16), durch welchen sich zumindest eine Leitungsdurchführung (15) erstreckt,
**dadurch gekennzeichnet, dass**
der elektrisch isolierende Wandungsbereich (16) sich über den Flanschanlagebereich (17) hinaus, dabei einen Abschnitt eines Anschlusskastens (22) bildend, erstreckt.

2. Vorrichtung nach Anspruch 1,
**dadurch gekennzeichnet, dass**
der elektrisch isolierende Wandungsbereich (16) eine Dichtfläche (18, 19) aufweist.

3. Vorrichtung nach Anspruch 2,
**dadurch gekennzeichnet, dass**
die Dichtfläche (18, 19) im Flanschanlagebereich (17) angeordnet ist.

4. Vorrichtung nach einem der Ansprüche 1 bis 3,
**dadurch gekennzeichnet, dass**
im Flanschanlagebereich (17) zumindest ein Verspannelement (20) angeordnet ist.

5. Vorrichtung nach einem der Ansprüche 1 bis 4,
**dadurch gekennzeichnet, dass**
der elektrisch isolierende Wandungsbereich (16) Teil einer Wandung des Anschlusskastens (22) ist.

6. Vorrichtung nach einem der Ansprüche 1 bis 5,
**dadurch gekennzeichnet, dass**
der Anschlusskasten (22) mit einem Abdeckelement (23) verschließbar ist.

7. Vorrichtung nach Anspruch 6,
d a durc h gekennzeichnet, dass
das Abdeckelement (23) im geschlossenen Zustand des Anschlusskatsens (22) den Flanschanlagebereich (17) überspannt.

8. Vorrichtung nach einem der Ansprüche 1 bis 7,
**dadurch gekennzeichnet, dass**
der Flanschverschlussdeckel (1) einem fluiddichten Verschluss eines Flansches (2) dient.

9. Vorrichtung nach einem der Ansprüche 1 bis 8,
**dadurch gekennzeichnet, dass**
der Flanschverschlussdeckel (1) Teil eines insbesondere fluiddichten Kapselungsgehäuses (3, 4) einer Elektroenergieübertragungseinrichtung ist.

## Claims

1. Device having a flange closure cap (1) having an electrically insulating wall region (16) extending into a flange bearing region (17) of the flange closure cap (1), at least one line feedthrough (15) extending therethrough,
**characterized in that**
the electrically insulating wall region (16) extends beyond the flange bearing region (17), herein forming a portion of a connector box (22).

2. Device according to Claim 1,
**characterized in that**
the electrically insulating wall region (16) has a sealing face (18, 19).

3. Device according to Claim 2,
**characterized in that**
the sealing face (18, 19) is disposed in the flange bearing region (17).

4. Device according to one of Claims 1 to 3,
**characterized in that**
at least one bracing element (20) is disposed in the flange bearing region (17).

5. Device according to one of Claims 1 to 4,
**characterized in that**
the electrically insulating wall region (16) is part of a wall of the connector box (22).

6. Device according to one of Claims 1 to 5,
**characterized in that**
the connector box (22) is closable by way of a cover element (23) .

7. Device according to Claim 6,
**characterized in that**
the cover element (23) in the closed state of the connector box (22) spans the flange bearing region (17).

8. Device according to one of Claims 1 to 7,
**characterized in that**
the flange closure cap (1) serves as a fluid-tight closure of a flange (2).

9. Device according to one of Claims 1 to 8,
**characterized in that**
the flange closure cap (1) is part of an in particular fluid-tight containment housing (3, 4) of an electrical power transmission installation.

## Revendications

1. Dispositif, comportant un capot (1) de fermeture à bride, ayant une partie (16) de paroi isolante électriquement, qui s'étend dans une partie (17) de contact de bride du capot (1) de fermeture à bride et à travers laquelle s'étend au moins une traversée (15) de ligne,
**caractérisé en ce que**
la partie (16) de paroi isolante électriquement s'étend au-delà de la partie (27) de contact de bride, en formant ainsi une partie d'un caisson (22) de connexion.

2. Dispositif suivant la revendication 1,
**caractérisé en ce que**
la partie (16) de paroi isolante électriquement a une surface (18, 19) d'étanchéité.

3. Dispositif suivant la revendication 2,
**caractérisé en ce que**
la surface (18, 19) d'étanchéité est disposée dans la partie (17) de contact de la bride.

4. Dispositif suivant l'une des revendications 1 à 3,
**caractérisé en ce qu'**
au moins un élément (20) de serrage est monté dans la partie (17) de contact de la bride.

5. Dispositif suivant l'une des revendications 1 à 4,
**caractérisé en ce que**
la partie (16) de paroi isolante électriquement fait partie d'une paroi du caisson (22) de connexion.

6. Dispositif suivant l'une des revendications 1 à 5,
**caractérisé en ce que**
le caisson (22) de connexion peut être raccordé à un élément (23) de recouvrement.

7. Dispositif suivant la revendication 6,
**caractérisé en ce que**
l'élément (23) de recouvrement chevauche la partie (17) de contact de la bride lorsque le caisson (22) de connexion est à l'état fermé.

8. Dispositif suivant l'une des revendications 1 à 7,
**caractérisé en ce que**
le capot (1) de fermeture à bride sert de fermeture étanche aux fluides d'une bride (2).

9. Dispositif suivant l'une des revendications 1 à 8,
**caractérisé en ce que**
le capot (1) de fermeture à bride fait partie d'un boîtier (3, 4) de blindage, notamment étanche aux fluides, d'un dispositif de transport d'énergie électrique.
